# EUROPEAN PATENT APPLICATION

(11) **EP 2 482 244 A2**
(43) Date of publication of application: **01.08.2012**
(21) Application number: 12000579.8
(22) Date of filing: 30.01.2012
(51) Int. Cl.: G06Q 20/40

(54) **Method and system for determining fraud in a card-not-present transaction**

(30) Priority: 28.01.2011 US 201113437480; 27.01.2012 US 201213360537
(71) Applicant: Mastercard International, Inc., Purchase, NY 10577 (US)
(72) Inventor: Smith, Janet, Des Peres, MO 63131 (US); Chrisholm, John D., Ballwin, MO 63011 (US); Gerber, Johan, Wildwood, MO 63005 (US); Salazar, Clara, Ballwin, MO 63011 (US); Wickman, Matthew, O'Fallon, MO 63368 (US); Meyer, Susan, St. Charles, MO 63301 (US); Cordero, Rachael Vahle, O'Fallon, MO 63368 (US); Merz, Christopher, Wildwood, MO 63040 (US)
(74) Representative: Müller-Boré & Partner Patentanwälte

(57) **Abstract**

A computer system for fraud detection associated with a card-not-present payment card system is provided. The system includes a network host site and an interchange network including a processor communicatively coupled to a memory device for storing data and to the network host site wherein the processor is programmed to receive a card transaction authorization request message from a merchant, route the card transaction authorization request to the network host site to perform CNP fraud risk scoring, and based on the criteria of the card transaction authorization request, call at least one of a plurality of fraud scoring models defined for criteria of the transaction authorization request. The processor is further programmed to calculate the fraud risk score based on the current transaction authorization request data and an updated card account profile, and transmit the message to an issuer of the payment card for approval of the request.

## Description

### CROSS REFERENCE TO RELATED APPLICATIONS

This application claims the benefit of U.S. Provisional Patent Application No. 61/437,480 filed January 28, 2011, which is hereby incorporated by reference in its entirety.

### BACKGROUND OF THE INVENTION

This invention relates generally to payment card networks and, more particularly, to network-based methods and systems for providing fraud risk scoring of payment card transactions including card-not-present (CNP) transactions.

Online merchants are faced with lost revenue and significant costs for fraudulent transactions. At least some known merchants address the problem through either increased headcount for manually reviewing orders or using an automated screening service. There is a growing web fraud detection market with companies offering automated tools to merchants for managing their risk of fraud. More and more, merchants are implementing these third-party web fraud detection services. A few of the larger, more sophisticated merchants have built their own tools.

Merchants are challenged to detect more sophisticated fraud attempts by online users posing as consumers and looking to commit fraud. These challenges increase when the merchants grow their online sales operations. To detect fraud, a variety of data points from the transaction and the ordering device itself are reviewed for anomalies or inconsistencies. Moreover, merchants manage their order review and fraud detection by manually flagging and checking high risk orders, using automated screening, rules-based tools, using fraud detection tools developed in-house, and using tools licensed from third-party fraud detection vendors. Although merchants do have access to past cardholder history on their site, they do not have access to the total view of the cardholder's online and offline history across multiple merchants.

### BRIEF DESCRIPTION OF THE INVENTION

In one embodiment, a computer system for fraud detection associated with a card-not-present payment card transaction system includes a network host site and an interchange network including a processor communicatively coupled to a memory device for storing data and to the network host site wherein the processor is programmed to receive a card transaction authorization request message from a merchant through an acquirer for a card-not-present (CNP) transaction, the card transaction authorization request message including a fraud risk score request indicator, route the card transaction authorization request to the network host site to perform CNP fraud risk scoring, and based on the criteria of the card transaction authorization request, call by the network host site at least one of a plurality of fraud scoring models defined for criteria of the transaction authorization request. The processor is further programmed to calculate the fraud risk score based on the current transaction authorization request data and an updated card account profile using the defined fraud scoring model, transmit the message to an issuer of the payment card for approval of the request, and route the card transaction authorization request response message to the merchant through the acquirer, including the issuer authorization decision and the CNP fraud risk score.

In another embodiment, a computer-implemented method of performing a payment card transaction fraud risk scoring includes for a card-not-present (CNP) transaction, receiving a payment card transaction authorization request message from a merchant wherein the card transaction authorization request message includes a fraud risk score request indicator, requesting performance of a CNP fraud risk scoring, and receiving a CNP fraud risk score calculated based on the current transaction authorization request data and a payment card account profile wherein the payment card account profile utilizes long-term variables and has been updated with the current CNP transaction data in real time using a defined fraud scoring model. The method also includes populating the calculated CNP fraud risk score within the card authorization request message, receiving a response to scored payment card authorization message from the issuer associated with the payment card account, and routing the card transaction authorization request response message to at least one of the acquirer and the merchant, including the card issuer authorization decision and the CNP fraud risk score.

In still another embodiment, one or more non-transitory computer-readable storage media having computer-executable instructions embodied thereon, wherein when executed by at least one processor, the computer-executable instructions cause the processor to for a card-not-present (CNP) transaction, receive a payment card transaction authorization request message from a merchant, the card transaction authorization request message including a fraud risk score request indicator and request performance of a CNP fraud risk scoring. The computer-executable instructions further cause the processor to receive a CNP fraud risk score calculated based on the current transaction authorization request data and a payment card account profile, the payment card account profile updated with the current CNP transaction data in real time using a defined fraud scoring model, populate the calculated CNP fraud risk score within the card authorization request message, and receive a response to scored payment card authorization message from the issuer associated with the payment card account. The computer-executable instructions also cause the processor to route the card transaction authorization request response message to at least one of the acquirer and the merchant, including the card issuer authorization decision and the CNP fraud risk score.

### BRIEF DESCRIPTION OF THE DRAWINGS

FIGS. 1-10 show exemplary embodiments of the method and system described herein.

FIG. 1 is a schematic diagram illustrating an exemplary multiparty payment card industry system for enabling ordinary payment-by-card transactions in which merchants and card issuers do not necessarily have a one-to-one relationship.

FIG. 2 is a simplified block diagram of an exemplary payment account card system in accordance with one embodiment of the present invention.

FIG. 3 is an expanded block diagram of an exemplary embodiment of a server architecture of a payment account card system in accordance with one embodiment of the present invention.

FIG. 4 illustrates an exemplary configuration of a cardholder computer device operated by a cardholder.

FIG. 5 illustrates an exemplary configuration of a server computer device such as the server system shown in FIGS. 2 and 3.

FIG. 6 is a simplified data flow block diagram of an exemplary fraud detection system in accordance with one embodiment of the present invention that may be used with the card-not-present payment card system interchange networks shown in FIGS. 2 and 3.

FIG. 7 is a flow diagram showing a fraud scoring method of card-not-present payment card system interchange network, which may be implemented using the systems shown in FIGS. 2 and 3.

FIG. 8 is a simplified data flow block diagram of exemplary fraud detection system in accordance with another embodiment of the present invention.

FIG. 9 is a simplified data flow block diagram of an exemplary fraud score delivery system that may be used with the payment account card systems shown in FIGS. 2 and 3.

FIG. 10 is a data flow diagram of a long-term variable loading process in accordance with an exemplary embodiment of the present invention.

### DETAILED DESCRIPTION OF THE INVENTION

The following detailed description illustrates embodiments of the invention by way of example and not by way of limitation. The description clearly enables one skilled in the art to make and use the disclosure, describes several embodiments, adaptations, variations, alternatives, and uses of the disclosure, including what is presently believed to be the best mode of carrying out the disclosure. The disclosure is described as applied to an exemplary embodiment, namely, systems and methods of generating and propagating payment card transaction fraud risk scores for merchants and/or issuers in a payment card system interchange network. However, it is contemplated that this disclosure has general application to computing systems in industrial, commercial, and residential applications.

As used herein, an element or step recited in the singular and preceded with the word "a" or "an" should be understood as not excluding plural elements or steps, unless such exclusion is explicitly recited. Furthermore, references to "one embodiment" of the present invention are not intended to be interpreted as excluding the existence of additional embodiments that also incorporate the recited features.

Embodiments of the present invention described herein relate to determining a fraud risk score in payment card transactions, such as, card-not-present payment card transactions.

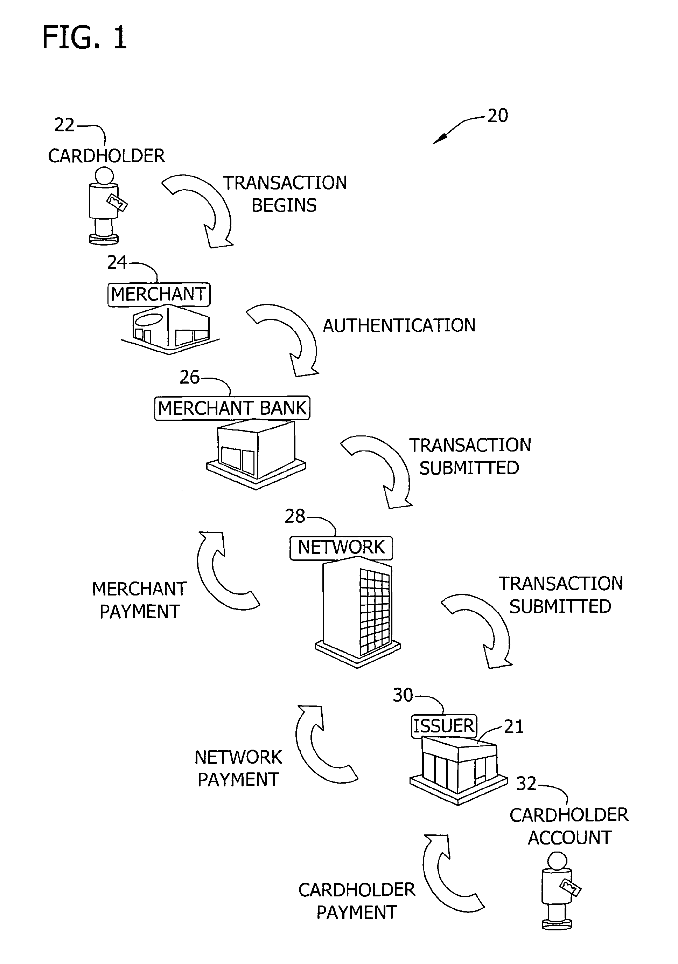

FIG. 1 is a schematic diagram illustrating an exemplary multiparty payment card system 20 for enabling ordinary payment-by-card transactions in which merchants and card issuers do not necessarily have a one-to-one relationship. The present invention relates to payment card system 20, such as a credit card payment system using the MasterCard® payment card system interchange network 28. MasterCard® payment card system interchange network 28 is a proprietary communications standard promulgated by MasterCard International Incorporated® for the exchange of financial transaction data between financial institutions that are members of MasterCard International Incorporated®. (MasterCard is a registered trademark of MasterCard International Incorporated located in Purchase, New York).

In payment card system 20, a financial institution such as an issuer 30 issues a payment account card, such as a credit card account or a debit card account, to a cardholder 22, who uses the payment account card to tender payment for a purchase from a merchant 24. To accept payment with the payment account card, merchant 24 must normally establish an account with a financial institution that is part of the financial payment system. This financial institution is usually called the "merchant bank" or the "acquiring bank" or "acquirer bank" or simply "acquirer. When a cardholder 22 tenders payment for a purchase with a payment account card (also known as a financial transaction card), merchant 24 requests authorization from acquirer 26 for the amount of the purchase. The request may be performed over the telephone, but is usually performed through the use of a point-of-sale terminal, which reads the cardholder's account information from the magnetic stripe on the payment account card and communicates electronically with the transaction processing computers of acquirer 26. Alternatively, acquirer 26 may authorize a third party to perform transaction processing on its behalf. In this case, the point-of-sale terminal will be configured to communicate with the third party. Such a third party is usually called a "merchant processor" or an "acquiring processor."

Using payment card system interchange network 28, the computers of acquirer 26 or the merchant processor will communicate with the computers of issuer 30 to determine whether the cardholder's account is in good standing and whether the purchase is covered by the cardholder's available credit line or account balance. Based on these determinations, the request for authorization will be declined or accepted. If the request is accepted, an authorization code is issued to merchant 24.

When a request for authorization is accepted, the available credit line or available balance of cardholder's account 32 is decreased. Normally, a charge is not posted immediately to a cardholder's account because bankcard associations, such as MasterCard International Incorporated®, have promulgated rules that do not allow a merchant to charge, or "capture," a transaction until goods are shipped or services are delivered. When a merchant ships or delivers the goods or services, merchant 24 captures the transaction by, for example, appropriate data entry procedures on the point-of-sale terminal. If a cardholder cancels a transaction before it is captured, a "void" is generated. If a cardholder returns goods after the transaction has been captured, a "credit" is generated.

For debit card transactions, when a request for a PIN authorization is approved by the issuer, the cardholder's account 32 is decreased. Normally, a charge is posted immediately to cardholder's account 32. The bankcard association then transmits the approval to the acquiring processor for distribution of goods/services, or information or cash in the case of an ATM.

After a transaction is captured, the transaction is settled between merchant 24, acquirer 26, and issuer 30. Settlement refers to the transfer of financial data or funds between the merchant's account, acquirer 26, and issuer 30 related to the transaction. Usually, transactions are captured and accumulated into a "batch," which is settled as a group.

Financial transaction cards or payment account cards can refer to credit cards, debit cards, and prepaid cards. These cards can all be used as a method of payment for performing a transaction. As described herein, the term "financial transaction card" or "payment account card" includes cards such as credit cards, debit cards, and prepaid cards, but also includes any other devices that may hold payment account information, such as mobile phones, personal digital assistants (PDAs), and key fobs.

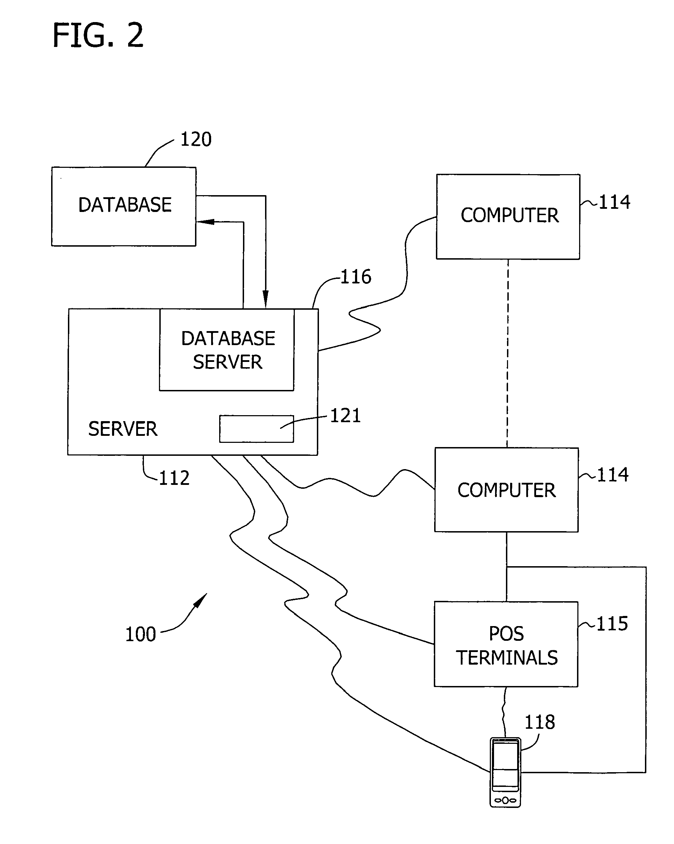

FIG. 2 is a simplified block diagram of an exemplary payment account card system 100 in accordance with one embodiment of the present invention. System 100 is a payment account card system, which can be utilized by account holders as part of a process of initiating an authorization request and performing a transaction as described below.

More specifically, in the example embodiment, system 100 includes a server system 112, which is a type of computer system, and a plurality of client sub-systems (also referred to as client systems 114) connected to server system 112. In one embodiment, client systems 114 are computers including a web browser, such that server system 112 is accessible to client systems 114 using the Internet. Client systems 114 are interconnected to the Internet through many interfaces including a network, such as a local area network (LAN) or a wide area network (WAN), dial-in-connections, cable modems, and special high-speed ISDN lines. Client systems 114 could be any device capable of interconnecting to the Internet including a web-based phone, personal digital assistant (PDA), or other web-based connectable equipment.

System 100 also includes point-of-sale (POS) terminals 115, which are connected to client systems 114 and may be connected to server system 112. POS terminals 115 are interconnected to the Internet through many interfaces including a network, such as a local area network (LAN) or a wide area network (WAN), dial-in-connections, cable modems, wireless modems, and special high-speed ISDN lines. POS terminals 115 could be any device capable of interconnecting to the Internet and including an input device capable of reading information from a cardholder's financial transaction card.

A database server 116 is connected to database 120, which contains information on a variety of matters, as described below in greater detail. In one embodiment, centralized database 120 is stored on server system 112 and can be accessed by cardholders at one of client systems 114 by logging onto server system 112 through one of client systems 114. In an alternative embodiment, database 120 is stored remotely from server system 112 and may be non-centralized. Database 120 may store transaction data generated as part of sales activities conducted over the bankcard network including data relating to merchants, account holders or customers, and purchases. Database 120 may also store account data including at least one of a cardholder name, a cardholder address, an account number, and other account identifier. Database 120 may also store merchant data including a merchant identifier that identifies each merchant registered to use the payment account card network, and instructions for settling transactions including merchant bank account information. In one embodiment, a card-not-present risk scoring service system 121 is stored on server system 112 and can be accessed by cardholders at one of client systems 114 by logging onto server system 112 through one of client systems 114.

System 100 also includes at least one input device 118, which is configured to communicate with at least one of POS terminal 115, client systems 114 and server system 112. In the exemplary embodiment, input device 118 is associated with or controlled by a cardholder making a purchase using a payment account card and payment account card system 100. Input device 118 is interconnected to the Internet through many interfaces including a network, such as a local area network (LAN) or a wide area network (WAN), dial-in-connections, cable modems, wireless modems, and special high-speed ISDN lines. Input device 118 could be any device capable of interconnecting to the Internet including a web-based phone, personal digital assistant (PDA), or other web-based connectable equipment. Input device 118 is configured to communicate with POS terminal 115 using various outputs including, for example, Bluetooth communication, radio frequency communication, near field communication, network-based communication, and the like.

In the example embodiment, one of client systems 114 may be associated with acquirer 26 while another one of client systems 114 may be associated with an issuer 30, POS terminal 115 may be associated with merchant 24, input device 118 may be associated with cardholder 22, and server system 112 may be associated with payment card system interchange network 28.

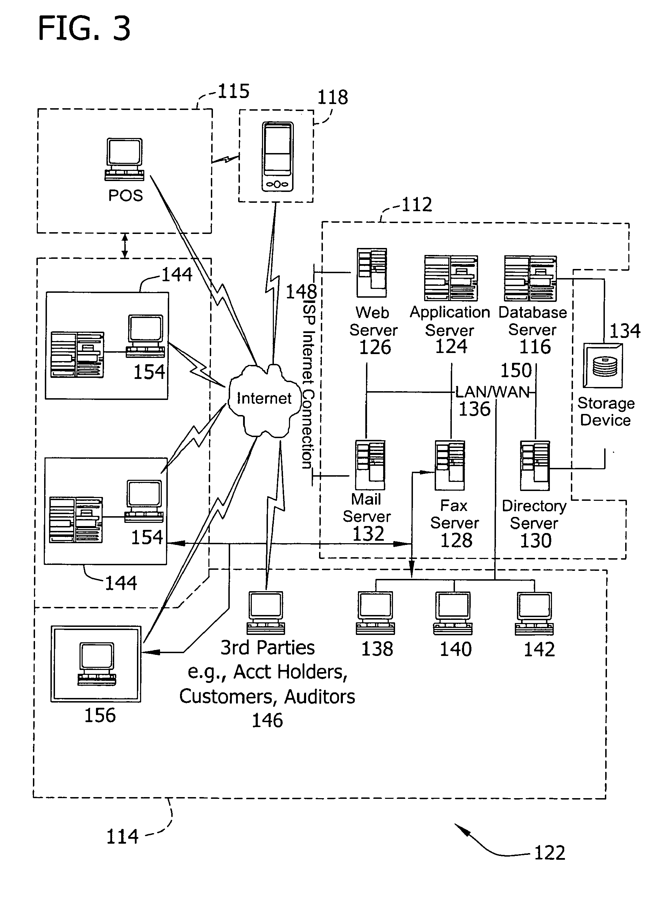

FIG. 3 is an expanded block diagram of an exemplary embodiment of a server architecture of a payment account card system 122 in accordance with one embodiment of the present invention. Components in system 122, identical to components of system 100 (shown in FIG. 2), are identified in FIG. 3 using the same reference numerals as used in FIG. 2. System 122 includes server system 112, client systems 114, POS terminals 115, and input devices 118. Server system 112 further includes database server 116, a transaction server 124, a web server 126, a fax server 128, a directory server 130, and a mail server 132. A storage device 134 is coupled to database server 116 and directory server 130. Servers 116, 124, 126, 128, 130, and 132 are coupled in a local area network (LAN) 136. In addition, a system administrator workstation 138, a cardholder workstation 140, and a supervisor workstation 142 are coupled to LAN 136. Alternatively, workstations 138, 140, and 142 are coupled to LAN 136 using an Internet link or are connected through an Intranet.

Each workstation, 138, 140, and 142 is a personal computer having a web browser. Although the functions performed at the workstations typically are illustrated as being performed at respective workstations 138, 140, and 142, such functions can be performed at one of many personal computers coupled to LAN 136. Workstations 138, 140, and 142 are illustrated as being associated with separate functions only to facilitate an understanding of the different types of functions that can be performed by individuals having access to LAN 136.

Server system 112 is configured to be communicatively coupled to various individuals, including employees 144 and to third parties, e.g., account holders, customers, auditors, etc., 146 using an ISP Internet connection 148. The communication in the exemplary embodiment is illustrated as being performed using the Internet, however, any other wide area network (WAN) type communication can be utilized in other embodiments, i.e., the systems and processes are not limited to being practiced using the Internet. In addition, and rather than WAN 150, local area network 136 could be used in place of WAN 150.

In the exemplary embodiment, any authorized individual having a workstation 154 can access system 122. At least one of the client systems includes a manager workstation 156 located at a remote location. Workstations 154 and 156 are personal computers having a web browser. Also, workstations 154 and 156 are configured to communicate with server system 112. Furthermore, fax server 128 communicates with remotely located client systems, including a client system 156 using a telephone link. Fax server 128 is configured to communicate with other client systems 138, 140, and 142 as well.

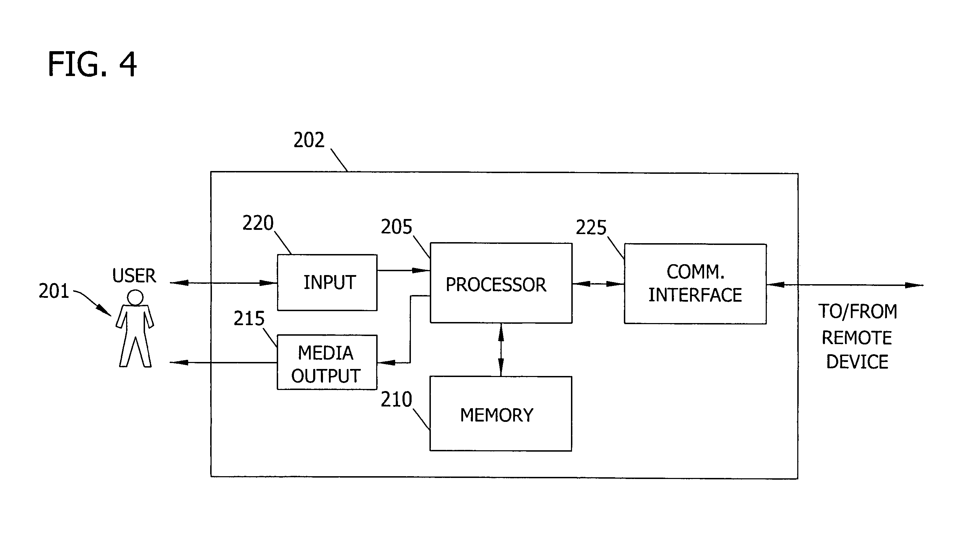

FIG. 4 illustrates an exemplary configuration of a cardholder computer device 202 operated by a cardholder 201. Cardholder computer device 202 may include, but is not limited to, client systems 114, 138, 140, and 142, POS terminal 115, input device 118, workstation 154, and manager workstation 156 (shown in FIG. 3).

Cardholder computer device 202 includes a processor 205 for executing instructions. In some embodiments, executable instructions are stored in a memory area 210. Processor 205 may include one or more processing units (e.g., in a multi-core configuration). Memory area 210 is any device allowing information such as executable instructions and/or other data to be stored and retrieved. Memory area 210 may include one or more computer readable media.

Cardholder computer device 202 also includes at least one media output component 215 for presenting information to cardholder 201. Media output component 215 is any component capable of conveying information to cardholder 201. In some embodiments, media output component 215 includes an output adapter such as a video adapter and/or an audio adapter. An output adapter is operatively coupled to processor 205 and operatively couplable to an output device such as a display device (e.g., a liquid crystal display (LCD), organic light emitting diode (OLED) display, cathode ray tube (CRT), or "electronic ink" display) or an audio output device (e.g., a speaker or headphones).

In some embodiments, cardholder computer device 202 includes an input device 220 for receiving input from cardholder 201. Input device 220 may include, for example, a keyboard, a pointing device, a mouse, a stylus, a touch sensitive panel (e.g., a touch pad or a touch screen), a gyroscope, an accelerometer, a position detector, or an audio input device. A single component such as a touch screen may function as both an output device of media output component 215 and input device 220.

Cardholder computer device 202 may also include a communication interface 225, which is communicatively couplable to a remote device such as server system 112. Communication interface 225 may include, for example, a wired or wireless network adapter or a wireless data transceiver for use with a mobile phone network (e.g., Global System for Mobile communications (GSM), 3G, 4G or Bluetooth) or other mobile data network (e.g., Worldwide Interoperability for Microwave Access (WIMAX)).

Stored in memory area 210 are, for example, computer readable instructions for providing a user interface to cardholder 201 via media output component 215 and, optionally, receiving and processing input from input device 220. A user interface may include, among other possibilities, a web browser and client application. Web browsers enable cardholders, such as cardholder 201, to display and interact with media and other information typically embedded on a web page or a website from server system 112. A client application allows cardholder 201 to interact with a server application from server system 112.

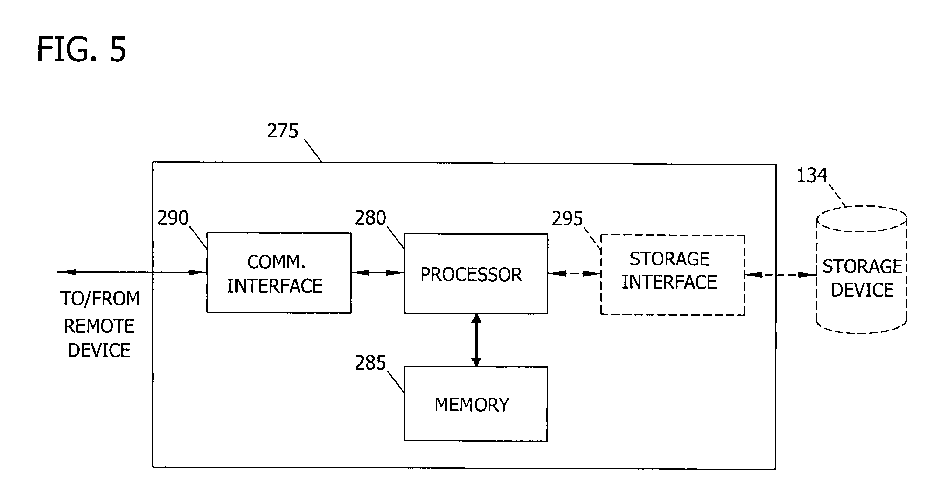

FIG. 5 illustrates an exemplary configuration of a server computer device 275 such as server system 112 (shown in FIGS. 2 and 3). Server computer device 275 may include, but is not limited to, database server 116, transaction server 124, web server 126, fax server 128, directory server 130, and mail server 132.

Server computer device 275 includes a processor 280 for executing instructions. Instructions may be stored in a memory area 285, for example. Processor 280 may include one or more processing units (e.g., in a multi-core configuration).

Processor 280 is operatively coupled to a communication interface 290 such that server computer device 275 is capable of communicating with a remote device such as cardholder computer device 202 or another server computer device 275. For example, communication interface 290 may receive requests from client systems 114 or input device 118 via the Internet, as illustrated in FIGS. 2 and 3.

Processor 280 may also be operatively coupled to a storage device 134. Storage device 134 is any computer-operated hardware suitable for storing and/or retrieving data. In some embodiments, storage device 134 is integrated in server computer device 275. For example, server computer device 275 may include one or more hard disk drives as storage device 134. In other embodiments, storage device 134 is external to server computer device 275 and may be accessed by a plurality of server computer devices 275. For example, storage device 134 may include multiple storage units such as hard disks or solid state disks in a redundant array of inexpensive disks (RAID) configuration. Storage device 134 may include a storage area network (SAN) and/or a network attached storage (NAS) system.

In some embodiments, processor 280 is operatively coupled to storage device 134 via a storage interface 295. Storage interface 295 is any component capable of providing processor 280 with access to storage device 134. Storage interface 295 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 280 with access to storage device 134.

Memory areas 210 and 285 may include, but are not limited to, random access memory (RAM) such as dynamic RAM (DRAM) or static RAM (SRAM), read-only memory (ROM), erasable programmable read-only memory (EPROM), electrically erasable programmable read-only memory (EEPROM), and non-volatile RAM (NVRAM). The above memory types are exemplary only, and are thus not limiting as to the types of memory usable for storage of a computer program.

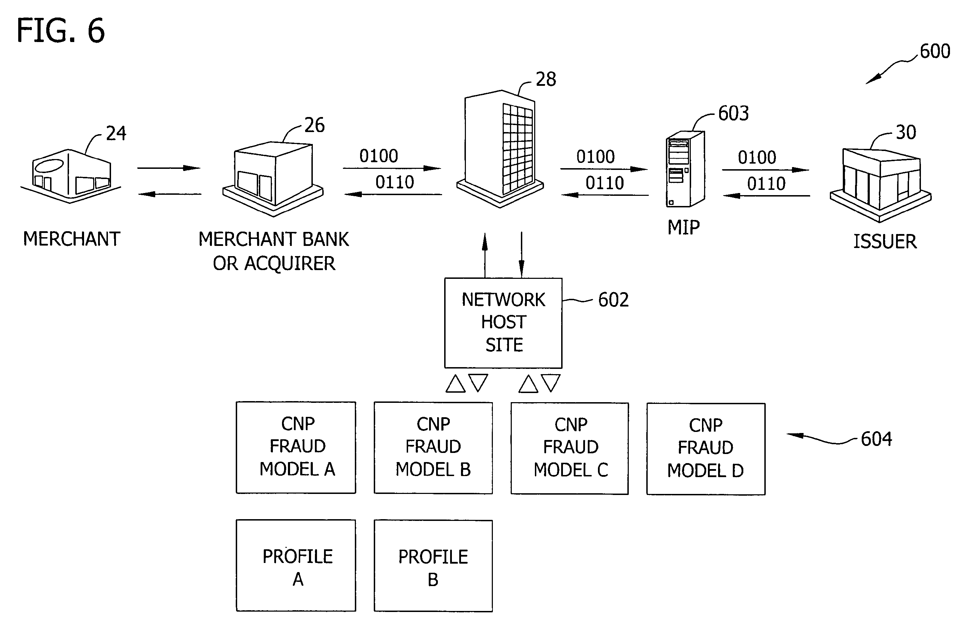

FIG. 6 is a simplified data flow block diagram of an exemplary fraud detection system 600 in accordance with one embodiment of the present invention that may be used with the payment account card systems shown in FIGS. 2 and 3. System 600 provides real-time fraud scoring for merchants using predictive modeling technology to provide participating acquirers and merchants with a real-time fraud score for card-not-present (CNP) transactions. In various embodiments, the real-time fraud score is a network-based fraud score that measures the likelihood that the transaction on the associated card account is fraudulent. In the exemplary embodiment, fraud detection system 600 functions as part of a normal authorization of a transaction using payment card system interchange network 28. Specifically, an authorization request message is received from merchant 24 at payment card system interchange network 28, payment card system interchange network 28 determines whether acquirer or merchant 24 has subscribed to the fraud scoring service implemented by fraud detection system 600, if so payment card system interchange network 28, routes the transaction information to a network host site 602 that calculates a fraud score for the transaction associated with the received authorization request, and sends the authorization request to the issuer. In one embodiment, the fraud score is removed from the authorization at a MASTERCARD INTERFACE PROCESSOR™ or MIP™ 603 (trademarks of MasterCard International, Inc., of Purchase, New York) such that the issuer does not receive the fraud score and determines authorization without using the fraud score. In various embodiments, the fraud score is transmitted to the issuer and the issuer uses the fraud score during the issuer authorization decision. The issuer then approves or denies the authorization request. The score is appended to the response to the authorization request that is forwarded from issuer 30 to merchant 24 through payment card system interchange network 28. In various embodiments, fraud detection system 600 is used primarily with card-not-present transactions where merchant seeks to reduce the risk associated with accepting fraudulent transactions when the payment account card is not present during the transaction.

Specifically, CNP transactions are payment transactions that use transaction card information stored by a merchant and wherein the transaction card is not present for the actual transaction. For example, a health club member may wish to avoid mailing a monthly check for club membership dues. The member may instead register a transaction card, such as a credit card, a debit card, or a prepaid card, with the club, enabling the club to automatically charge the transaction card for the monthly dues on a particular day each month. In some such systems, merchant 24 stores an account number, an expiration date, and/or other information associated with the transaction card and/or cardholder. The cardholder gives ongoing permission to merchant 24 to submit a payment request (i.e., to initiate a transaction) on behalf of the cardholder. The payment request may be submitted through POS terminal 115 (shown in FIG. 2) associated with merchant 24 (shown in FIG. 1) and/or through a merchant computer system. Alternatively, the cardholder uses the transaction card to make any suitable transaction by, for example, entering account data into a merchant website. In the exemplary embodiment, when the cardholder uses the transaction card to make each transaction, merchant 24 transmits a transaction authorization request from POS terminal 115 to server system 112, which is associated with payment card system interchange network 28 (shown in FIG. 1). The transaction authorization request includes the account number and transaction data representing the purchase made by the cardholder.

To determine the fraud score, network host site 602 uses at least one of a plurality of fraud scoring models 604. Each of the plurality of fraud scoring models 604 are selectable based on a criteria predetermined by network host site 602 based, for example, on an issuing region associated with the transaction card account wherein the issuing region is associated with the location of the issuing bank and/or domicile of the cardholder. The card not present models are built based on the issuing region, for example, a US CNP model, a Europe CNP model, etc.

Each model uses a payment card account profile associated with the payment card account used in the transaction. The payment card account profile includes historical transaction information for that payment card account and long term variables. The amount of historical transaction information used in each case is selectable based on factors including a level of accuracy in detecting fraudulent transactions.

The payment card account profile contains long term variables which collect the spending behavior for each individual card account for card present and card not present transactions over a predetermined and selectable time period, for example, the most recent 12 month period. The long-term variables are utilized by the card not present model scoring algorithms to calculate the fraud risk score on card not present transactions effected on the identified card account.

The long term variables are flexible and can be modified, added or removed from the card not present fraud scoring model without having to rebuild the model. In one embodiment, the long term variables are collected offline and updated to the card not present model at regular intervals. In various embodiments, long term variables are collected and updated to the card not present model in near real-time. As described herein, the long term variables are used by the card not present fraud scoring model but are external to the model. However, it should be understood that the long term variables may also be integral to the model. Updating the long term variables offline provides a broad view of the card both in length of time and in card present behavior, but eliminates the need to transmit all the card present transactions through the model.

In one embodiment, network host site 602 is a stand-alone system that may be located remotely from payment card system interchange network 28. In various embodiments, network host site 602 is a subsystem of payment card system interchange network 28 and may be co-located with payment card system interchange network 28 or located remotely from payment card system interchange network 28.

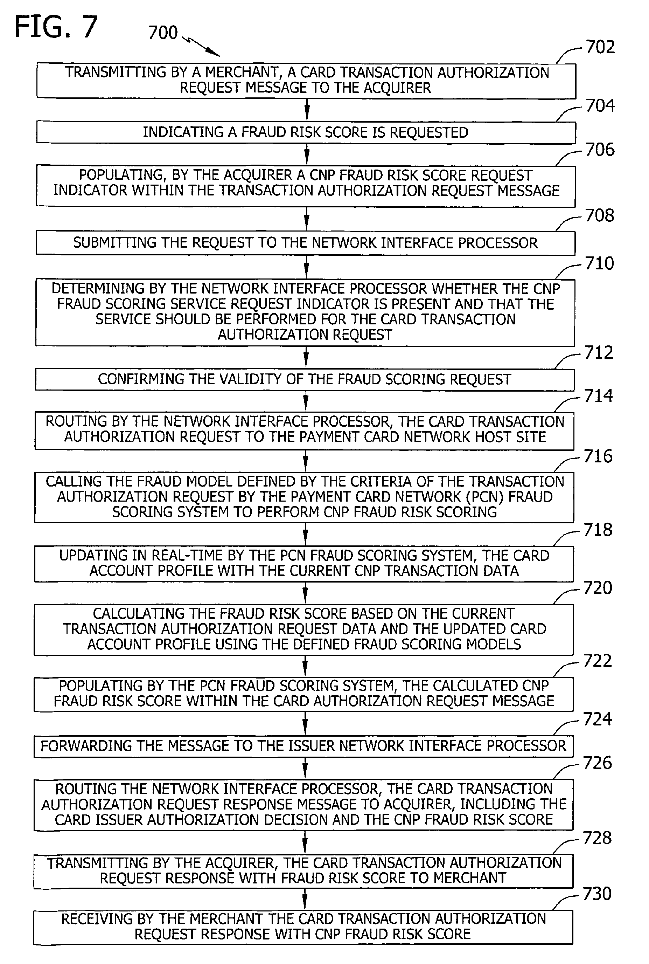

FIG. 7 is a flow diagram showing a fraud scoring method 700 of card-not-present payment card system interchange network 28, which may be implemented using the system shown in FIGS. 2 and 3. In the exemplary embodiment, method 700 includes for a card-not-present transaction, transmitting 702, by a merchant, a payment card transaction authorization request message to an acquirer that indicates 704 that a fraud risk score is also being requested. In one embodiment, the fraud risk score request indication may be an explicit request indication, such as, but not limited to, a request indication field in the request message containing a specific value. In various embodiments, the fraud risk score request indication may be indicated by, for example, but not limited to, the request originating with a merchant or acquirer having a prearranged fraud risk score request profile on file with the interchange network.

The acquirer populates 706 a CNP fraud risk score request indicator within the transaction authorization request message and submits 708 the request to the interchange network. The interchange network determines 710 that the CNP fraud scoring service request indicator is present and that the service should be performed for the card transaction authorization request. After the validity of fraud scoring service request is confirmed 712, the interchange network routes 714 the card transaction authorization request to the host site of interchange network/payment card system to perform CNP fraud risk scoring.

Based on the criteria of the card transaction authorization request, the fraud scoring system of payment card system interchange network 28 calls 716 one or more of a plurality of fraud models defined for criteria of the transaction authorization request.

In real-time, the fraud scoring system of the payment card system interchange network updates 718 a card account profile with the current CNP transaction data, calculates 720 the fraud risk score based on the current transaction authorization request data as well as the updated card account profile including the long term variables using the defined fraud scoring models. As used herein, real-time refers to outcomes occurring at a substantially short period after a change in the inputs affecting the outcome, for example, receiving transaction data, calculating a fraud risk score and making the calculated fraud risk score available for transmission or further processing. The period is the amount of time between each iteration of a regularly repeated task or between one task and another. The time period is a result of design parameters of the real-time system that may be selected based on the importance of the outcome and/or the capability of the system implementing processing of the inputs to generate the outcome. Additionally, events occurring in real-time occur without substantial intentional delay. In one embodiment, the calculations are updated in real-time with a period of one minute. In various embodiments, the calculations are updated in real-time with a period of one second. In one embodiment, the fraud scoring system of payment card system interchange network 28 populates 722 the calculated CNP fraud risk score within the card authorization request message and forwards 724 the message on to the MIP, which removes the fraud score from the request message before forwarding the authorization request message to the issuer. The issuer generates a response of authorize or deny and transmits the response to MIP 603 there the fraud score is appended to the response message before forwarding the response message to the interchange network. In this way, the issuer does not have access to the fraud score. In various other embodiments, the fraud scoring system of payment card system interchange network 28 populates 722 the calculated CNP fraud risk score within the card authorization request message and forwards 724 the message on to the interchange network. In this embodiment, the issuer does have access to the fraud score.

The interchange network routes 726 the card transaction authorization request response message to the acquirer, including the card issuer authorization decision and the CNP fraud risk score. The acquirer transmits 728 the card transaction authorization request response with fraud risk score to the merchant. The merchant receives 730 the card transaction authorization request response with CNP fraud risk score.

In one embodiment, the merchant uses the fraud risk score to approve or deny the transaction. Upon denial, the merchant may transmit a denial message that is routed back to the issuer through the payment card system interchange network. The issuer may maintain a profile of payment card accounts that receive denials based on the fraud risk score. In various embodiments, the merchant may transmit the denial message to the fraud scoring system of the payment card system interchange network. The fraud scoring system of the payment card system interchange network may maintain a profile of payment card accounts that receive denials based on the fraud risk score.

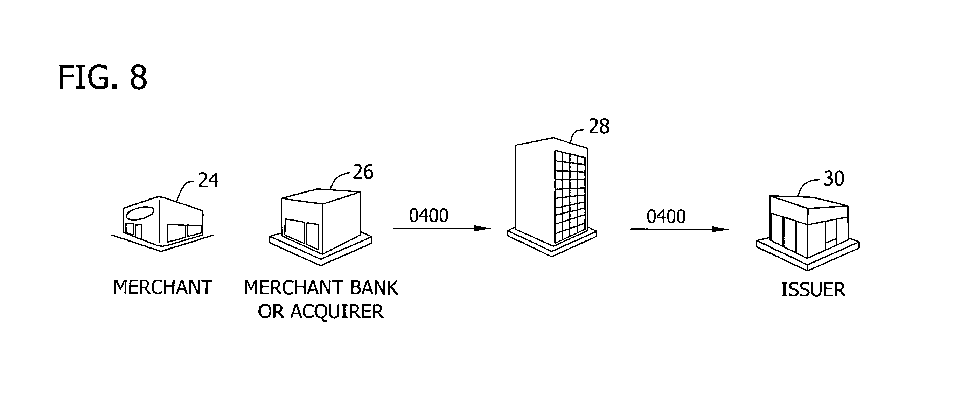

FIG. 8 is a simplified data flow block diagram of exemplary fraud detection system 600 in accordance with another embodiment of the present invention. In this exemplary embodiment, fraud detection system 600 in cases where merchant 24 denies the transaction after issuer 30 has approved the transaction through a card transaction authorization request response transmitted to merchant 24, issuer 30 must be informed of the denial by merchant 24. Therefore, if after receiving a card transaction authorization request response from issuer 30, merchant 24 determines the card transaction represents a high fraud risk, acquirer 26 or merchant 24 generates a card transaction authorization reversal request message through payment card system interchange network 28. The reversal request typically includes a reason code indicating the transaction was declined by merchant 24 due to for example, but not limited to, a relatively high fraud risk. Acquirer 26 routes the card transaction authorization reversal request message with a reason code to payment card system interchange network 28. Payment card system interchange network 28 confirms the validity of the reversal request message and reason code and routes the reversal message with a reason code to issuer 30.

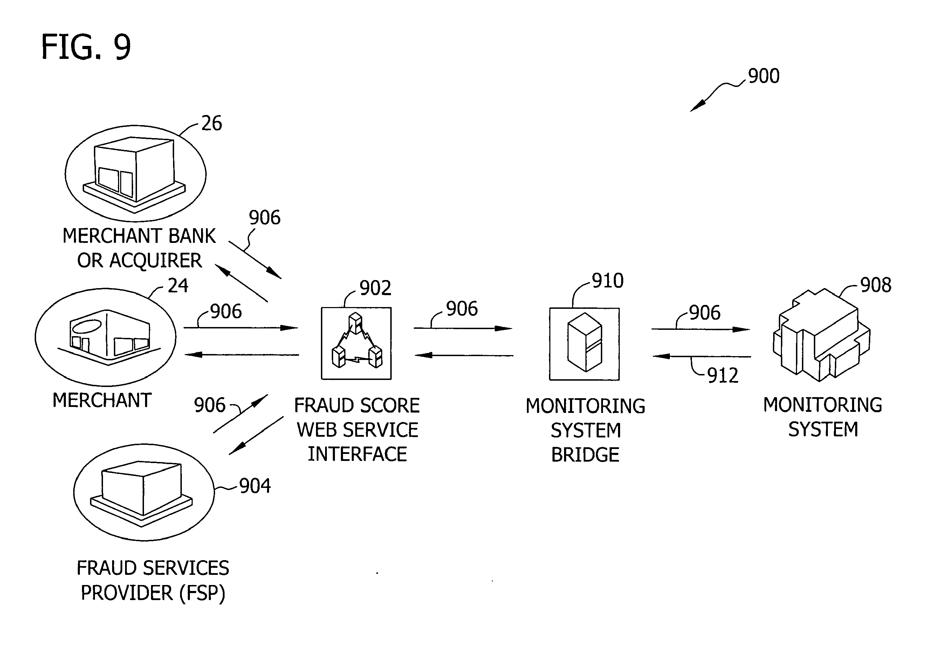

FIG. 9 is a simplified data flow block diagram of an exemplary fraud score delivery system 900 that may be used with the payment account card systems shown in FIGS. 2 and 3. In the exemplary embodiment, system 900 provides a fraud score for CNP transactions. As described above a fraud score is available to acquirers 26 and merchants 24 through payment card system interchange network 28 via the authorization message transmitted from issuer 30 to merchant 24. As described herein, a fraud score is also available to acquirers 26, fraud service providers 904, and merchants 24 through MasterCard's ® web service interface 902 with payment card system interchange network 28.

In the exemplary embodiment, merchant 24, acquirer 26, or a third-party fraud services provider 904 transmits a fraud score request 906 in, for example, the form of a service call to a monitoring system 908, where fraud scores for transactions are stored. Fraud score request 906 is transmitted through web service interface 902 and a monitoring system bridge 910 associated with payment card system interchange network 28. However, although described as being a MasterCard® proprietary network, payment card system interchange network 28 may be associated, owned, and/or operated by any other entity as well. Fraud score request 906 is serviced at monitoring service 908 and a fraud score 912 is returned to acquirer 26, fraud service provider 904, or merchant 24 that originated the fraud score service call through monitoring system bridge 910 and web service interface 902. Fraud score delivery system 900 provides a web service interface to banknet authorization transactions for the purpose of returning a fraud score in real time for the already calculated fraud scores via web service calls. Fraud score delivery system 900 merchants 24 and fraud service providers 904 that may not have access in receiving the fraud score in the authorization request response to still receive fraud scores.

In one embodiment, fraud score delivery system 900 is a stand-alone system that may be located remotely from payment card system interchange network 28. In various embodiments, fraud score delivery system 900 is a subsystem of payment card system interchange network 28 and may be co-located with payment card system interchange network 28 or located remotely from payment card system interchange network 28.

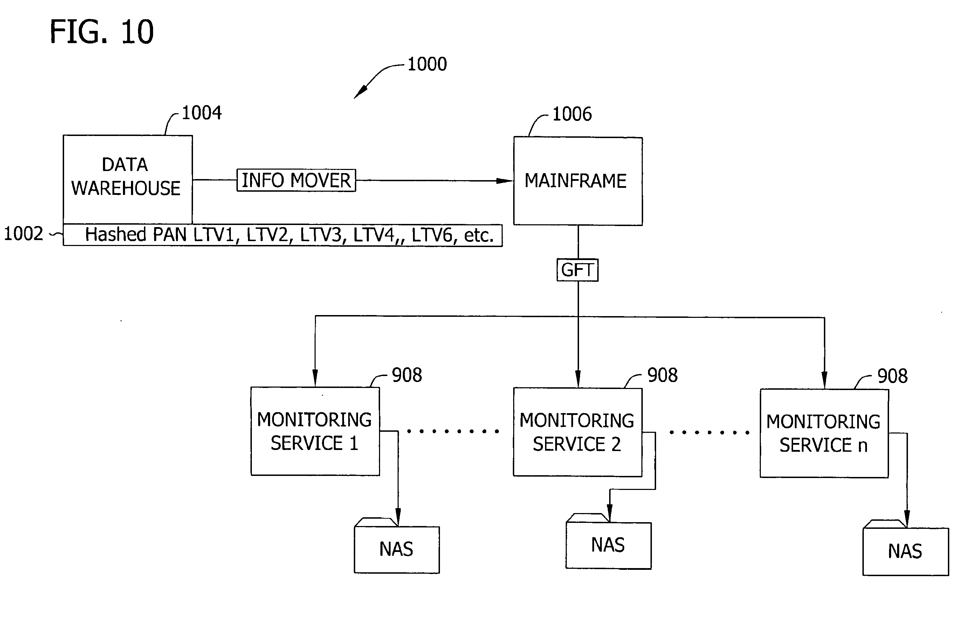

FIG. 10 is a data flow diagram of a long-term variable loading process 1000 in accordance with an exemplary embodiment of the present invention. In the exemplary embodiment, the LTV data 1002 for each account is represented as a single line with comma delimiters. The line includes a secure hash algorithm (SHA) primary account number (PAN) having a digest of, for example, 256 bits. However, hash functions having other length digests are also contemplated. The hashed PAN is followed by the values of the long term variables. In the exemplary embodiment, approximately two hundred LTVs are supported, of which approximately forty-five are defined to support the CNP models. In the exemplary embodiment, the values are numeric floating point values, but are treated as string values by monitoring service 908.

The values for the LTVs are based on their sequence in the line by position. If a LTV is retired, it remains part of the line layout, but the retired LTV is always empty. When a new LTV is added, it is added automatically, assuming the upper limit of supported LTVs is not reached. If the upper limit for the supported number of LTVs is reached, coding changes may be used to support an additional block of available LTVs. In the exemplary embodiment, the LTVs are not model specific in that one set of LTVs applies to one or more models. In various other embodiments, one or more LTVs may correspond to particular models.

Monitoring service 908 updates an interface to include 200 additional fields, named "LTV1" through "LTV200", and populates these values based on the LTVs for the current transaction retrieved. Any missing or empty LTVs will be supplied as a space. Monitoring service 908 retrieves the LTVs and transmits the LTVs to all models. Meaningful variable names are mapped to the LTVs, and the mapping is available to monitoring service 908.

In the exemplary embodiment, a data warehouse (DW) 1004 creates files each week containing the LTV data, in the comma separated format described above. Because a total size of the files created by the DW is approximately 200 gigabytes (GB), the DW breaks the files into smaller size files of approximately one GB each, and compresses the files prior to transmitting them to a server or mainframe 1006, which then transfers the files to all monitoring service 908 locations. A special trigger is transmitted to indicate that the overall feed is complete.

The term processor, as used herein, refers to central processing units, microprocessors, microcontrollers, reduced instruction set circuits (RISC), application specific integrated circuits (ASIC), logic circuits, and any other circuit or processor capable of executing the functions described herein.

As used herein, the terms "software" and "firmware" are interchangeable, and include any computer program stored in memory for execution by processor 205, including RAM memory, ROM memory, EPROM memory, EEPROM memory, and non-volatile RAM (NVRAM) memory. The above memory types are exemplary only, and are thus not limiting as to the types of memory usable for storage of a computer program.

As will be appreciated based on the foregoing specification, the above-described embodiments of the disclosure may be implemented using computer programming or engineering techniques including computer software, firmware, hardware or any combination or subset thereof, wherein the technical effect is using at least one of a plurality of models to determine a fraud risk score for each payment card transaction in real-time, using a profile of payment card account transactions including the current transaction to score the fraud risk, providing the fraud risk score to a merchant subscriber of the fraud risk score services, reversing the current payment card transaction at the issuer when the merchant denies the transaction, and providing an increased level of card-not-present risk protection for merchants. Any such resulting program, having computer-readable code means, may be embodied or provided within one or more computer-readable media, thereby making a computer program product, i.e., an article of manufacture, according to the discussed embodiments of the disclosure. The computer-readable media may be, for example, but is not limited to, a fixed (hard) drive, diskette, optical disk, magnetic tape, semiconductor memory such as read-only memory (ROM), and/or any transmitting/receiving medium such as the Internet or other communication network or link. The article of manufacture containing the computer code may be made and/or used by executing the code directly from one medium, by copying the code from one medium to another medium, or by transmitting the code over a network.

The above-described embodiments of a method and system of scoring a fraud risk for payment card transactions, including card-not-present transactions using an interchange network provides a cost-effective, secure, and reliable means for providing to an increased level of fraud risk avoidance to merchants using card-not-present transactions.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

According to an aspect, a computer-implemented method of providing a fraud risk score for a card-not-present (CNP) payment card transaction is provided. The method may comprise: receiving, at web service interface from at least one of an acquirer, a merchant, and a fraud services provider, a service call including card-not-present (CNP) transaction information and a fraud risk score request; requesting a fraud risk score associated with the CNP transaction information from data storage; receiving a previously determined CNP fraud risk score calculated based on the CNP transaction information; and routing, through the web service interface, the CNP fraud risk score to the acquirer, merchant, or fraud services provider that requested the fraud risk score.

In a further aspect, the fraud risk score fraud risk score may be calculated based on current transaction authorization request data when the authorization request was made and a payment card account profile, the payment card account profile updated with the current CNP transaction data in real time using a defined fraud scoring model.

## Claims

1. A computer system for fraud detection associated with a card-not-present payment card system interchange network, the fraud detection computer system comprising:
a network host site;
an interchange network comprising a processor communicatively coupled to a memory device for storing data and to said network host site, said processor programmed to:
receive a card transaction authorization request message from a merchant through an acquirer for a card-not-present (CNP) transaction, the card transaction authorization request message including a fraud risk score request indicator;
route the card transaction authorization request to the network host site to perform CNP fraud risk scoring;
based on criteria of the card transaction authorization request, call by the network host site at least one of a plurality of fraud scoring models defined for criteria of the transaction authorization request;
calculate the fraud risk score based on the current transaction authorization request data and an updated card account profile using the defined fraud scoring model;
transmit the message to an issuer of the payment card for approval of the request; and
route the card transaction authorization request response message to the merchant through the acquirer, including the issuer authorization decision and the CNP fraud risk score.

2. A computer system in accordance with Claim 1, wherein the computer system is programmed to
receive the transaction authorization request message populated with the CNP fraud risk score request indicator; and/or
identify the CNP fraud scoring service request indicator is present and that the service should be performed for the card transaction authorization request.

3. A computer system in accordance with Claim 1 or 2, wherein the plurality of fraud scoring models are associated with respective geographical regions where at least one of the acquirer and the cardholder are located.

4. A computer system in accordance with any one of the preceding Claims, wherein the computer system is programmed to receive a card transaction authorization reversal request message generated by at least one of the merchant and the acquirer.

5. A computer system in accordance with Claim 4, wherein the card transaction authorization reversal request message includes a reason code indicating the transaction was declined by merchant due to the transaction representing a relatively high fraud risk; and/or
wherein the computer system is programmed to confirm the validity of the received reversal request message and reason code and to route the reversal message with a reason code to the issuer.

6. A computer system in accordance with any one of the preceding Claims, wherein said processor is further programmed to confirm a validity of the fraud risk score request.

7. A computer system in accordance with any one of the preceding Claims, wherein said processor is further programmed to in real-time, update a card account profile associated with the payment card account making the request with the current CNP transaction data.

8. A computer system in accordance with any one of the preceding Claims, wherein said payment card account profile includes long term variables, said long term variables used to collect the spending behavior for each individual card account for card present and card not present transactions over a predetermined and selectable time period.

9. A computer system in accordance with any one of the preceding Claims, wherein said processor is further programmed to populate the calculated CNP fraud risk score within the card authorization request message if the issuer is a subscriber to the fraud scoring service.

10. A computer system in accordance with any one of the preceding Claims, wherein said processor and said network host site are located remotely with respect to each other and operated by different business entities.

11. A computer-implemented method of performing a payment card transaction fraud risk scoring, said method comprising:
for a card-not-present (CNP) transaction, receiving a payment card transaction authorization request message from a merchant, the card transaction authorization request message including a fraud risk score request indicator;
requesting performance of a CNP fraud risk scoring;
receiving a CNP fraud risk score calculated based on the current transaction authorization request data and a payment card account profile, the payment card account profile updated with the current CNP transaction data in real time using a defined fraud scoring model;
receiving a response to the payment card authorization message from the issuer associated with the payment card account;
populating the calculated CNP fraud risk score within the card authorization request message; and
routing the card transaction authorization request response message to at least one of the acquirer and the merchant, including the card issuer authorization decision and the CNP fraud risk score.

12. A computer-implemented method in accordance with Claim 11, further comprising:
identifying the CNP fraud scoring service request indicator is present and that the service should be performed for the card transaction authorization request; and
confirming the validity of the fraud scoring service request.

13. A computer-implemented method in accordance with Claim11 or 12, further comprising
transmitting the card transaction authorization request to a network host site to perform CNP fraud risk scoring; and/or
transmitting the message to the issuer associated with the payment card account.

14. A computer-implemented method in accordance with any one of Claims 11 to 13, further comprising:
calling, based on the criteria of the card transaction authorization request, at least one of a plurality of fraud models defined for the criteria;
updating, in real-time, a payment card account profile associated with the payment card account making the request with the current CNP transaction data; and
calculating the fraud risk score based on the current transaction authorization request data and the updated card account profile using the defined fraud scoring model.

15. Computer program product comprising computer readable instructions, which when loaded and run in a computer system and/or computer network system, causes the computer system and/or the computer network system to perform operations according to a method of any one of claims 11 to 14.
